# EUROPEAN PATENT APPLICATION

(11) **EP 4 397 548 A1**
(43) Date of publication of application: **10.07.2024**
(21) Application number: 23150624.7
(22) Date of filing: 06.01.2023
(51) Int. Cl.: B60S 1/24, F16C 11/06

(54) **BALL-JOINT ASSEMBLY FOR A WINDSHIELD WIPER MODULE**

(71) Applicant: VALEO SYSTÈMES d'ESSUYAGE, 78322 Le Mesnil Saint Denis (FR)
(72) Inventor: SPIECHA, Antoni, 32 050 Skawina (PL); CHRUPCZALSKI, Karol, 32 050 Skawina (PL)
(74) Representative: Valeo Visibility

(57) **Abstract**

A ball-joint assembly (36) of a crank (30) and a connecting rod (26) of a windshield wiper module, comprising a crankpin (40) fixed to the crank (30) and a ball-joint housing comprising a socket (42) configured to receive a spherical portion (44) of the crankpin (40), said socket (42) being fixed in an opening of an end of the connecting rod (26), wherein the socket (42) is made in one cylindrical part around an axis of revolution (60), said socket (42) having an internal cavity (70), whose dimensions are fitted to those of the spherical portion (44), and a bottom end (72) next to the crank (30) with an entry opening (73) which is wider than the diameter of the spherical portion (44) of the crankpin (40), the socket (42) further comprising a plurality of elastic tongues (46) arranged at an axial end (72, 78) of the socket and configured to snap-fit the socket (42) together with the crankpin (40).

## Description

The present invention relates to the field of the windshield wiper module, and more particularly concerns the ball-joint assembly between components of such modules.

A windshield wiper module comprises a wiper drive unit whose shaft is connected to two linkage subsystems respectively connected to a wiper shaft rotatably supported in a support member. Said support members and a support member of the wiper drive unit are fixed to the frame of the vehicle.

Linkage subsystems extend between the wiper drive unit and the wiper shaft and comprise a connecting rod linked to a first crank fixed to the shaft of the wiper drive unit and a second crank fixed to the wiper shaft, at least one of the connections between the connecting rod and a crank being a ball-joint assembly. Linkage subsystems transfer rotational motion of the shaft of the wiper drive unit into synchronized oscillatory movement of the wiper shafts.

Some of these modules are pre-mounted such that they arrive in one piece on the vehicle production lines, with stiffening bars between the support member for the drive unit and each support member for the wiper shaft. Only support members for the wiper drive unit and the wiper shaft are to attach to the frame of the vehicle. The at least one ball-joint assembly is made in a specific workshop, with an appropriate stamping press that allows a crankpin of the crank to be force-fitted into a cage of the connecting rod.

But simplified systems, without a stiffening bar between the axles, are now designed and their installation on the vehicle, while allowing greater flexibility in the position of the axles in relation to each other, also implies having to achieve the ball-joint assembly on site, where stamping press cannot be used.

It is thus sought to design ball-joint assemblies that allow assembly on production lines involving less effort.

According, therefore, to a first aspect, the invention is directed towards a ball-joint assembly of a crank and a connecting rod of a windshield wiper module, comprising a crankpin fixed to the crank and a ball-joint housing comprising a socket being arranged to receive the crankpin, said socket being fixed in an opening of an end of the connecting rod, wherein the socket is made in one cylindrical part around an axis of revolution, said socket having an internal cavity, whose dimensions are fitted to those of the spherical portion, and a bottom end next to the crank with an entry opening whose dimension is wider than the corresponding dimension of the spherical portion of the crankpin, the socket comprising a plurality of elastic tongues arranged at an axial end of the socket and configured to snap-fit the socket together with the crankpin.

The ball-joint assembly is advantageous in that it presents an effortless means of assembly to be able to link the connecting rod and the crank when these are delivered on the assembly line without being assembled beforehand, in particular in order to allow an assembly of the windshield wiper module on the vehicle which takes into account the assembly clearances.

Preferably, the socket is overmolded on the opening of the end of the connecting rod.

Such a configuration is advantageous in that it obtains an optimal retention of the socket on the connecting rod.

According to an aspect of the invention, said socket comprises a hole extending axially into the socket, said hole comprising the internal cavity, the entry opening and a narrow portion between the internal cavity and the entry opening.

According to an aspect of the invention, the internal cavity is defined by an annular surface with internal diameter substantially equal to the outer diameter of the spherical portion of the crankpin.

According to an aspect of the invention, the socket has a top portion and a bottom portion arranged on either side of the end of the connecting rod, both parts having radial dimensions greater than the corresponding dimensions of the opening of the end of the connecting rod.

According to an aspect of the invention, the elastic tongues are formed on the bottom end of the socket, around the entry opening.

According to an aspect of the invention, the spherical portion of the crankpin comprises a flat bottom surface that forms a stop surface for the elastic tongues.

According to an aspect of the invention, the elastic tongues are formed at a summit end of the socket, opposite to the crank, the spherical portion of the crankpin being axially extended with a top part so that the elastic tongues of the socket are locked between the spherical portion of the crankpin and the top part.

According to an aspect of the invention, the top part forms a cap extending the spherical portion of the crankpin opposite to the crank.

The invention also concerns a vehicle comprising a windshield wiper module with specification linkage subsystem comprising a ball-joint assembly as described above.

The invention also concerns a process of assembly of a windshield wiper module as mentioned before, comprising at least:
- a step of assembling the socket on the end of a connecting rod of the windshield wiper module in a first place, and
- a step of joining the connecting rod and the crank by snapping the crankpin of the crank on the socket together.

Such a process makes it possible to conduct each of the steps in different places, with different tools. The overmolding step can be performed with the connecting rod alone, in a simple-to-use mold. And the snapping step can be easily realized by an operator on the assembly line of the vehicle, without requiring too much effort thanks to the specific form of the socket and it enlarged entry opening for the crankpin.

Advantageously, the socket is assembled on the end of the connecting rod by overmolding.

Other characteristics and advantages of the invention will become apparent from the following description of several examples of implementation given by way of indication and not as a limitation with reference to the attached schematic drawings, wherein:
Figure 1 illustrates a windshield wiper module implementing a ball-joint assembly according to the invention;
Figure 2 is a detail view of the module of figure 1, showing an end of a connecting rod and an end of a crank linked by a ball-joint assembly according to the invention;
Figure 3 is a sectional view of the components visible in figure 2;
Figure 4 is a sectional view of a socket of the ball joint assembly overmolded on the connecting rod,
Figure 5 is an exploded view illustrating the crank and the connecting rod, before a step of assembly of these two components by the ball-joint assembly,
Figure 6 is a detail view, similar to figure 2, of an alternative embodiment of the invention, sectional view of another location of the ball-joint assembly according to the invention,
Figure 7 is a sectional view of the components visible in figure 3.

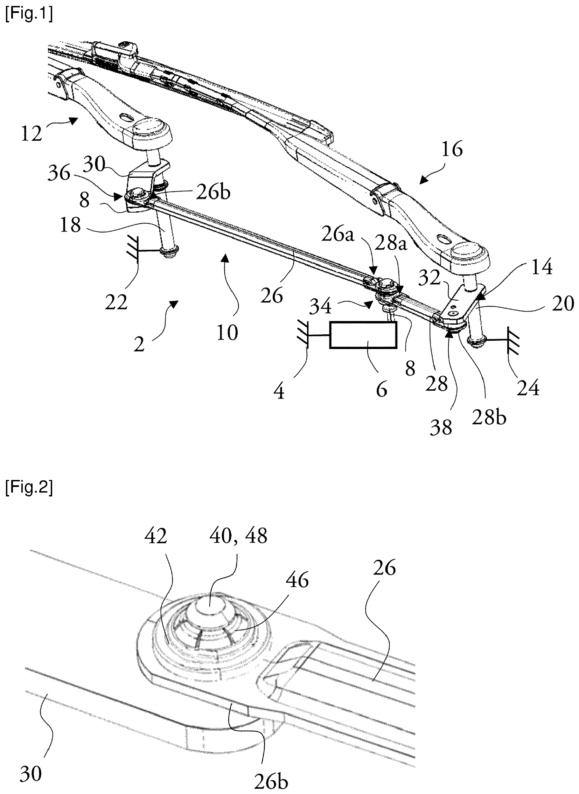

Figure 1 shows a linkage system for actuating windshield wipers of a motor vehicle, hereafter referred to as the system 2. When mounted in a motor vehicle, the system 2 is typically fixed to the frame of the vehicle by brackets here schematically illustrated.

A first bracket 4 supports an electric gear motor 6, schematically illustrated, the output shaft 8 of which is intended to drive a first linkage subsystem 10 for a first windshield wiper 12 and a second linkage subsystem 14 for a second windshield wiper 16, windshield wipers 12, 16 each comprising a wiper arm for actuating a wiper blade.

A longitudinal end of the wiper arm is secured to a drive shaft 18, 20, whose position next to the windshield is fixed by brackets 22, 24, the opposite longitudinal end of the wiper arm being connected to the wiper blade.

Each linkage subsystem 10, 14 extends from the output shaft 8 of the motor 6 to one of the drive shafts 18, 20 and comprises a connecting rod 26, 28 and a crank 30, 32. As illustrated, a first linkage subsystem 10 comprises a first connecting rod 26 and a first crank 30 and a second linkage subsystem 14 comprises a first connecting rod 28 and a second crank 32.

The connecting rods 26, 28 have a substantially rectilinear elongated general shape extending along an elongation axis A between a first longitudinal end 26a, 28a and a second longitudinal end 26b, 28b. The connecting rods are for example made by stamping a sheet and present an embossed central portion and planar longitudinal ends.

The first longitudinal end 26a, 28a of the connecting rod 26, 28 of a linkage subsystem 10, 14 is hinged to the output shaft 8 of the electric gear motor 6 by a first ball-joint assembly 34 and the second longitudinal end 26b, 28b is hinged to a first end of the crank 30, 32 of the said linkage subsystem by a second ball-joint assembly 36, 38.

The second end of the crank 30, 32 is integrally connected in rotation with the drive shaft of the corresponding windshield wiper.

Each ball-joint assembly 34, 36, 38 is made with a ball-joint housing, which comprises fixing means to the connecting rod, and a crankpin fixed to the crank. The crankpin is shaped to be received at least partly in an internal cavity of the ball-joint housing which has corresponding form and dimensions.

More particularly, the crankpin has a spherical portion whose dimensions, i.e. diameter, are substantially equal to corresponding dimensions of the internal cavity of the ball-joint housing.

As previously mentioned, the invention is related to a ball-joint assembly wherein the ball-joint housing is a socket, preferably overmolded, on the end of the connecting rod and which comprises snap-fitting means configured to be easy for an operator to assemble and to provide a reliable connection.

The invention relating to a particular form of a ball-joint assembly will be described more particularly with reference to the ball-joint assembly arranged between the first connecting rod and the first crank of the first linkage subsystem, as illustrated in figure 2, but it should be noted that it could be implemented in a similar manner at every ball-joint assembly of the system 2.

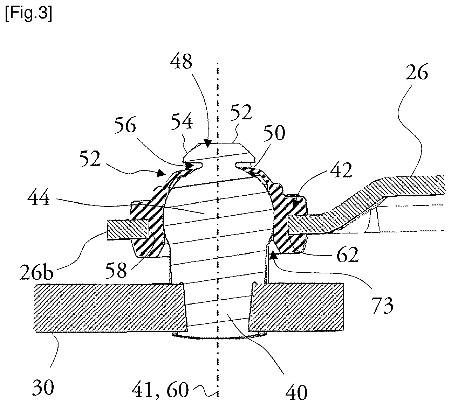

Figure 2 illustrates that the ball-joint assembly 36 comprises a crankpin 40 fixed to the first end of the crank 30 and a socket 42 forming the ball-joint housing as mentioned and fixed to the second end 26b of the connecting rod 26, said housing being configured to receive a spherical portion 44 of the crankpin, visible on figure 3. The ball-joint assembly allows a rotational movement of the crankpin relative to the socket around three axes.

The socket is made of plastic while both crankpin 40 and end of the connecting rod 26 are metallic.

The socket comprises elastic tongues 46 which form snap-on means arranged to interact with a top part 48 of the crankpin 40. The connection of the connecting rod 26 and the crank 30 is realized by snapping on socket 42 integral with the connecting rod and crankpin 40 integral with the crank, thanks to the elastic tongues 46.

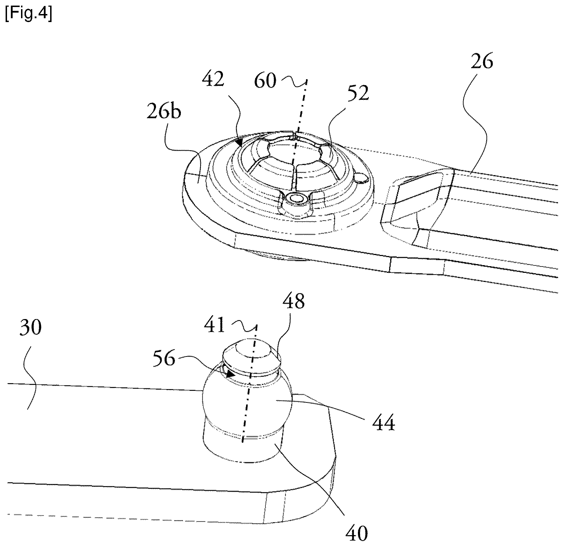

The figures 3 and 4 illustrate, with cross-sectional views, the form of the parts of the crankpin and the socket which cooperate.

The crankpin 40 extends along a first axis 41 perpendicular to the crank with the spherical portion 44 and the top part 48 as previously mentioned that follow each other from the crank along this first axis 41.

The top part 48 has a base surface 50 in regard with the spherical portion 44, said base surface 50 being perpendicular to the first axis 41. Moreover, the top part 48 has a truncated conical shape with said base surface 50, a summit surface 52, opposite to the base surface, and a lateral surface 54 extending circumferentially between the base surface and the summit surface. The lateral surface 54 is inclined in relation to the first axis 41 to form a ramp to facilitate insertion of said top part between the elastic tongues 46 of the socket 42.

It results from the forms of both top part 48 and spherical portion 44 that a space 56 is arranged between these two portions of the crankpin 40 to receive the elastic tongues 46 of the socket 42 as it may be seen clearly in figure 3.

The socket 42 is configured to receive the spherical portion 44 of the crankpin 40 in an appropriate manner to allow a three-axis-rotation, to ensure the axial fixation of said crankpin 40 by the snap-fitting means, and to be fixed to the connecting rod, in an opening 58 of the end of such connecting rod.

The socket 42 is overmolded on the end 26b of the connecting rod 26. The step of overmolding is made in a specific workshop or factory by the manufacturer of the windshield wiper module, and the set formed by the connecting rod 26 and the socket 42 is connected to the crank 30 on the assembly line of the vehicle.

The socket 42 is a cylindrical part with an axis of revolution 60. The socket 42 extends, according to this axis of revolution 60, on either side of the end of the connecting rod 26, such that the planar surface of this end is in a groove 62 of the socket. Said groove 62 is between a top portion 64 of the socket, arranged on one side of the connecting rod, and a bottom portion 66 of the socket, arranged on the other side of the connecting rod, both portions having the same axial thickness.

The socket 42 is arranged with a hole 68 extending along the axial dimension of the socket and being suitable for receiving the crankpin. The hole 68 has an internal cavity 70 formed by an annular surface dimensioned to fit with the spherical portion 44 of the crankpin 40 to allow a three-axis-rotation. As illustrated on figure 3, the socket 42 receives the spherical portion 44 of the crankpin 40 in the internal cavity 70.

Near the bottom end 72 of the socket 42, i.e. the end of the socket which is intended to be next to the crank 30, the hole 68 forms an entry opening for the crankpin. A dimension of the hole 68 in the entry opening 73, i.e. its diameter D1, is wider than the corresponding dimension, here the diameter D2, of the rest of the hole and more particularly of the internal cavity 70.

The dimension of the hole 68, i.e. its diameter, is enlarged by approaching the bottom end 72 such that the hole 68 is progressively widened to form an insertion ramp 74 for the crankpin inside the socket.

A narrow portion 76, with an internal diameter smaller than the internal diameter of the other portions of the socket 42, is arranged axially between the insertion ramp 74 and the internal cavity 70.

The elastic tongues 46 form snap-on means at a first axial end of the socket 42, here a summit end 78, opposite to the bottom end 72. The summit end 78 comprises an opening through which the top part 48 of the crankpin 40 passes, and the elastic tongues 46 each comprise at least a radial part 80 which extend across this opening of the summit end. Here, the elastic tongues 46 each comprise an axial part 82 which axially offsets the position of the radial part 80 across the opening of the summit end.

The elastic tongues are arranged on all the circumference of the socket, being separated from the adjacent elastic tongue by a slot 84.

The socket 42 is made from a material which has low friction and good wear qualities. In particular, engineering plastics such as PTFE, PEEK, POM, polyimide, nylon, and UHMW PE may be preferred. In a possible variant, the socket may be filled with a charge material to improve its wear characteristics, such as a glass or carbon fibers; or filled/impregnated with a lubricant to reduce friction, for instance graphite, molybdenum disulfide, or oil. The skilled person will be capable of determining the optimal composition and configuration for any given implementation of the invention.

It will be understood that the top part 48 of the crankpin 40 is a cap which is realized to make an abutment for the elastic tongues 46 of the socket 42 in the opposite direction to the spherical portion 44 of the crankpin 40.

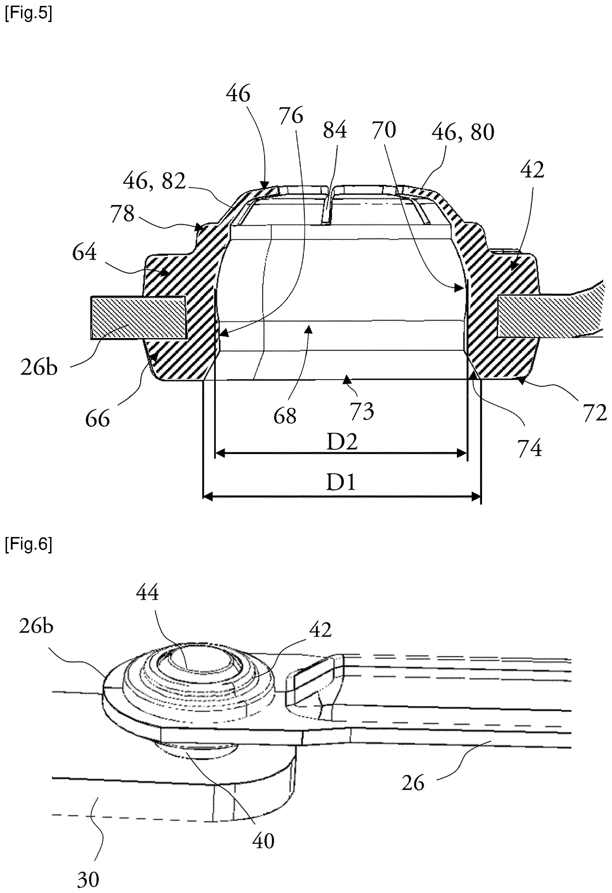

Figure 5 illustrates a step of the process of assembly before the crankpin 40 is inserted in the socket 42.

The step of assembling the crank 32 with the connecting rod 26 and the overmolded socket 42 can thus be easily performed by the operator on the vehicle assembly line, by inserting the crankpin 40 effortlessly into the socket 42, mainly thanks to the enlarged entry opening 73 of the socket 42 for the crankpin 40 and the insertion ramp 74. The snap-on means are elastically pushed outwards when the top part 48 of the crankpin 40 meets the elastic tongues 46 and such a spacing allow the continuation of the axial translation of the crankpin 40 inside the socket 42. The operator knows when to stop the insertion since the spherical portion 44 leaves the narrow portion 76 of the hole 68 to fit into the internal cavity 70. In this position, the top part 48 of the crankpin 40 is beyond the elastic togues 46 forming snap-on means, that may elastically return to their original shape to ensure an axial locking of the crankpin 40 in the two directions, by being engaged between the base surface 50 of the top part 48 and the spherical portion 44 of the crankpin 40.

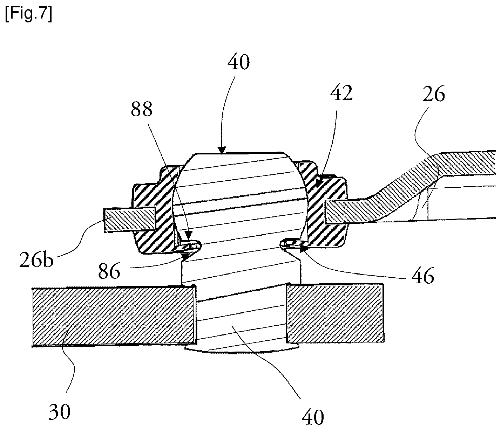

Figures 7 and 8 show another embodiment of the ball-joint assembly, which differs from the first embodiment in that the elastic tongues are in a different location. More particularly, the elastic tongues are still forming snap-on means that are arranged to fix the crankpin in the socket overmolded to the connecting rod, but these elastic tongues are another axial end of the socket, here at the bottom end of the socket.

It results from such a layout that the crankpin has no top part which extends the spherical portion in the axial direction.

A groove 86 is made at the beginning of the spherical portion, i.e between the spherical portion 44 and the crank 30, said groove 86 being arranged to receive the elastic tongues 46 when they return to their original position. The groove 86 is delimited by a flat surface which form a flat bottom surface 88 of the spherical portion 44, perpendicular to the first axis 41 of the crankpin 40.

As mentioned for the first embodiment, the bottom end 72 of the socket 42, i.e. the end of the socket which is intended to be next to the crank 30, is arranged such that the dimension of the entry opening 73 is enlarged compared to the rest of the hole 68 and at least the internal cavity 70 receiving the spherical portion.

The elastic tongues 46 forming snap-on means extend radially in this enlarged entry opening 73 and they are deformed by the spherical portion 44 when the crankpin 40 is inserted in the socket 42.

The radial dimension of these elastic tongues 46 is long enough to be in contact of the spherical portion 44 during the insertion and short enough not to be trapped between the spherical portion 44 and the wall delimiting the internal cavity 70 when the spherical portion 44 is in position inside the socket 42. The elastic tongues 46 may thus return to their original shape, generally perpendicular to the first axis but possibly with a slight inclination, to provide an axial abutment against the flat bottom surface 88 of the spherical portion 44 forming a stop surface.

The invention, as just described, achieves its intended purpose by providing a ball-joint assembly which is efficient to pass forces at the junction between a connecting rod and a crank and which is easy to assembly for an operator on the assembly line. Of course, the invention is not limited to the examples just described, and many adjustments can be made to these examples without leaving the scope of the invention.

## Claims

1. A ball-joint assembly (34, 36, 38) of a crank (30, 32) and a connecting rod (26, 28) of a windshield wiper module, comprising a crankpin (40) fixed to the crank (30, 32) and a ball-joint housing comprising a socket (42) configured to receive a spherical portion (44) of the crankpin (40), said socket (42) being fixed in an opening (58) of an end of the connecting rod (26, 28), wherein the socket (42) is made in one cylindrical part around an axis of revolution (60), said socket (42) having an internal cavity (70), whose dimensions are fitted to those of the spherical portion (44), and a bottom end (72) next to the crank (30) with an entry opening (73) whose dimension is wider than the corresponding dimension of the spherical portion (44) of the crankpin (40), the socket (42) comprising a plurality of elastic tongues (46) arranged at an axial end (72, 78) of the socket and configured to snap-fit the socket (42) together with the crankpin (40).

2. The ball-joint assembly (34, 36, 38) of claim 1, wherein the socket (42) is overmolded on the opening (58) of the end of the connecting rod (26).

3. The ball-joint assembly (34, 36, 38) of any one of the preceding claims, wherein said socket (42) comprises a hole (68) extending axially into the socket (42), said hole comprising the internal cavity (70), the entry opening (73) and a narrow portion (76) between the internal cavity (70) and the entry opening (73).

4. The ball-joint assembly (34, 36, 38) of any one of the preceding claims, wherein the internal cavity (70) is defined by an annular surface with internal diameter substantially equal to the outer diameter of the spherical portion (44) of the crankpin (40).

5. The ball-joint assembly (34, 36, 38) of any one of the preceding claims, wherein the socket (42) has a top portion (64) and a bottom portion (66) arranged on either side of the end of the connecting rod (26, 28), both parts having radial dimensions greater than the corresponding dimensions of the opening (46) of the end of the connecting rod (26, 28).

6. The ball-joint assembly (34, 36, 38) of any one of the preceding clams, wherein the elastic tongues (46) are formed on the bottom end (72) of the socket (42), around the entry opening (73).

7. The ball-joint assembly (34, 36, 38) of any one of the preceding claims, wherein the spherical portion (44) of the crankpin (40) comprises a flat bottom surface (88) that forms a stop surface for the elastic tongues (46).

8. The ball-joint assembly (34, 36, 38) of any one of claims 1 to 6, wherein the elastic tongues (46) are formed at a summit end (78) of the socket (42), opposite to the crank (30), the spherical portion (44) of the crankpin (40) being axially extended with a top part (48) so that the elastic tongues (46) of the socket (42) engage the crankpin (40) between the spherical portion (44) of the crankpin (40) and the top part (48).

9. The ball-joint assembly of the preceding claim, wherein the top part (48) forms a cap extending the spherical portion (44) of the crankpin (40) opposite to the crank (32).

10. Vehicle comprising a windshield wiper module with at least a linkage subsystem comprising a ball-joint assembly (34, 36, 38) according to any one of the preceding claims.

11. Process of assembly of a windshield wiper drive module according to any one of the claims 1 to 9, comprising at least:
- a step of assembling the socket (42) on the end of a connecting rod (26, 28) of the windshield wiper module in a first place, and
- a step of joining the connecting rod (26, 28) and the crank (30, 32) by snapping the crankpin (40) of the crank (30, 32) on the socket (42) together.

12. The process according to the preceding claim, wherein the socket (42) is assembled on the end of the connecting rod (26, 28) by overmolding.
